# EUROPEAN PATENT APPLICATION

(11) **EP 3 514 918 A1**
(43) Date of publication of application: **24.07.2019**
(21) Application number: 17850495.7
(22) Date of filing: 07.06.2017
(51) Int. Cl.: H02K 1/14, F04D 29/00, H02K 1/18

(54) **ELECTRIC BLOWER**

(30) Priority: 16.09.2016 JP 2016182352
(71) Applicant: Toshiba Lifestyle Products & Services Corporation, Kawasaki-shi, Kanagawa 210-8543 (JP)
(72) Inventor: OSHIKIRI Go, Kawasaki-shi Kanagawa 210-8543 (JP)
(74) Representative: Haseltine Lake Kempner LLP
(86) International application number: PCT/JP2017/021220
(87) International publication number: WO 2018/051588

(57) **Abstract**

Provided is an electric blower capable of more accurately setting the positions of the tip sides of teeth relative to a rotor, while improving the efficiency thereof. A cylindrical-shaped back yoke (31) includes first yoke parts (41) and second yoke parts (42). The first yoke parts (41) are each positioned between one pair of teeth (32a), (32b) and between one pair of teeth (32c), (32d), so as to face to each other, and respectively have substantially equal lengths in a circumferential direction. The second yoke parts (42) are respectively positioned between the one pair of teeth (32a), (32b) and the other pair of teeth (32c), (32d), so as to face to each other, and respectively have substantially equal lengths in the circumferential direction. The first yoke parts (41) respectively have shorter lengths in the circumferential direction compared to the second yoke parts (42), and further the magnetic passages formed at the first yoke parts (41) are respectively larger than the magnetic passages formed at the second yoke parts (42).

## Description

### TECHNICAL FIELD

Embodiments described herein relate generally to an electric blower including a brushless motor having a stator core for rotating a rotor connected to a fan.

### BACKGROUND ART

As for a conventional brushless fan motor for use in, for example, a vacuum cleaner or the like, a single-phase 4-pole type is adopted as a brushless motor for rotating a centrifugal fan. Such a single-phase 4-pole brushless motor includes a cylindrical-shaped stator core having four teeth with the tip sides thereof facing the outer circumference of a rotor, and the teeth are disposed to be spaced substantially equally in the circumferential direction. Thus, in the case where a brushless motor is downsized, the inside of the stator core is smaller, and thus it is not easy to provide a coil around each of the teeth by machine for automatic winding or to increase the winding ratio thereof.

### CITATION LIST

### Patent Literature

PTL 1: Japanese Registered Utility Model Publication No. 3193357

### SUMMARY OF INVENTION

### Technical Problem

The configuration according to the above-indicated PTL 1 includes two C-shaped stator cores facing to each other having teeth at the both end portions thereof, thereby enabling to provide automatic winding and increase the winding ratio, resulting in improving the efficiency.

However, in the case of such a configuration, positioning of each stator core depends on a resin member, and thus it is not easy to improve the positional accuracy of the tip sides of teeth relative to a rotor.

The problem to be solved by the present invention is to provide an electric blower capable of more accurately setting the positions of the tip sides of the teeth relative to the rotor, while improving the efficiency thereof.

### Solution to Problem

An electric blower in the embodiments is an electric blower including a fan and a single-phase 4-pole brushless motor for rotating this fan. The brushless motor has a rotor connected to the fan, and a stator including a stator core, the stator rotating the rotor. The stator core has four teeth each having one end side disposed so as to face a circumference of the rotor and each having a coil wound around in a state of being insulated, and a cylindrical-shaped back yoke forming a magnetic passage so as to connect other end sides of the teeth in between. This back yoke has first yoke parts and second yoke parts. The first yoke parts are each positioned between one pair of the teeth and face to each other, and respectively have substantially equal lengths in a circumferential direction. The second yoke parts are respectively positioned between one of the pairs of the teeth and an other of the pairs of the teeth and face to each other, and respectively have substantially equal lengths in the circumferential direction. Then, the first yoke parts respectively have shorter lengths in the circumferential direction compared to the second yoke parts, and further the magnetic passages formed at the first yoke parts are respectively larger than the magnetic passages formed at the second yoke parts.

### BRIEF DESCRIPTION OF DRAWINGS

Fig. 1 is a plan view showing a stator core of an electric blower according to a first embodiment;
Fig. 2 (a) is a plan view showing a stator including the above stator core, and Fig. 2(b) is a perspective view of the stator;
Fig. 3 is a disassembled perspective view of the above electric blower;
Fig. 4(a) is a perspective view showing the above electric blower from one direction, and Fig. 4(b) is a perspective view showing the electric blower from other direction;
Fig. 5 is a plan view showing a stator core of an electric blower according to a second embodiment; and
Fig. 6 is a plan view showing a stator core of an electric blower according to a third embodiment.

### DESCRIPTION OF EMBODIMENTS

Hereinbelow, the first embodiment will be described in terms of its configuration with reference to the figures.

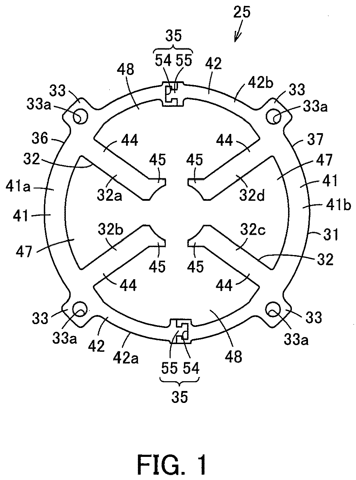

In Fig. 1 to Fig. 4, reference sign 11 denotes an electric blower. This electric blower 11 includes a brushless motor 13. This electric blower 11 includes a centrifugal fan 14 serving as a fan. The electric blower 11 also includes a diffuser 15 serving as a straightening plate. This electric blower 11 is a brushless fan motor with the centrifugal fan 14 covered by a fan cover 16. Then, in many cases, this electric blower 11 is used in a vacuum cleaner, for example, a suction cleaner, a blower or the like.

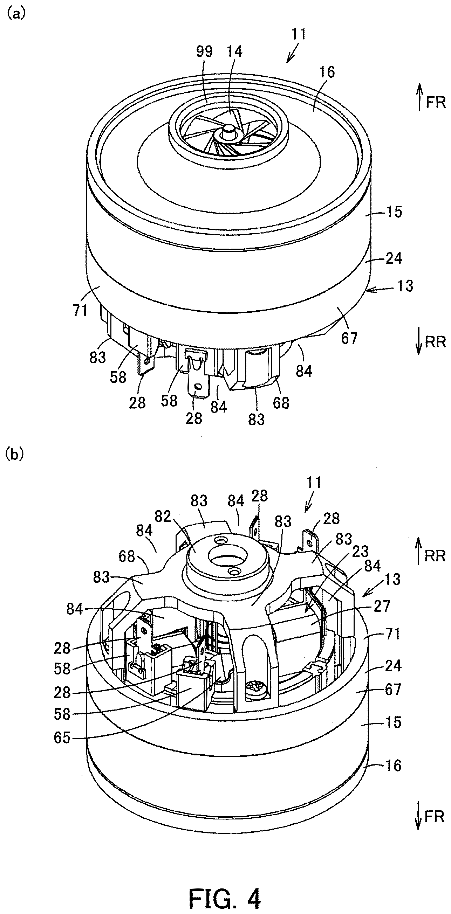

The brushless motor 13 is a single-phase 4-pole brushless motor. Then, this brushless motor 13 includes a motor body portion 23 including a stator 21 and a rotor 22 rotated by the stator 21. This brushless motor 13 further includes a frame 24. This frame 24 houses the motor body portion 23. Then, this brushless motor 13 is designed to be controlled in operation by a control circuit not shown in the figures. In addition, in the following description, the up-and-down direction and the left-and-right direction shown in Fig. 1 respectively correspond to the up-and-down direction and the left-and-right direction of the electric blower 11 (brushless motor 13), and the side of the brushless motor 13 in the axis direction of the electric blower 11 corresponds to the back direction (the side according to an arrow RR shown in Fig. 4(a) and other figures), while the side of the centrifugal fan 14 corresponds to the front direction (the side according to an arrow FR shown in Fig. 4(a) and other figures).

The stator 21 forms a fixed magnetic pole for rotating the rotor 22. This stator 21 includes a stator core 25. This stator 21 also includes a stator insulator 26. The stator 21 further includes a coil 27. This stator 21 includes a terminal 28.

The stator core 25 is formed in a board shape having a substantially constant thickness where thin-sheet magnetic bodies such as electromagnetic steel sheets are laminated. This stator core 25 includes a back yoke 31. This stator core 25 includes a plurality of teeth 32. In the present embodiment, the teeth 32 include a first tooth 32a, a second tooth 32b, a third tooth 32c and a fourth tooth 32d. This stator core 25 also includes an attaching part 33. This stator core 25 is also divided into a plurality of portions at a dividing part 35. In the present embodiment, this stator core 25 is divided into two (right and left) portions each having a substantially-semi-arc shape. That is, this stator core 25 is configured in the state where two (first and second) yoke bodies (core members) 36, 37 which are punched out, for example, by press forming or the like are integrally connected at the dividing part 35.

The back yoke 31 connects the teeth 32 therebetween, and in the back yoke 31 a magnetic passage is formed so as to magnetically couple (by magnetic-flux coupling) the fixed magnetic poles therebetween generated by the coils 27, 27 wound around the teeth 32, 32. This back yoke 31 includes a first yoke part 41 (first yoke parts 41a, 41b) which is formed between the first tooth 32a and the second tooth 32b which are in an upper-and-lower pair, and also between the third tooth 32c and the fourth tooth 32d which are in an upper-and-lower pair respectively, and includes a second yoke part 42 (second yoke parts 42a, 42b) which is formed between the first and second teeth 32a, 32b and the third and fourth teeth 32c, 32d respectively, that is, between the first tooth 32a and the fourth tooth 32d located left and right and also between the second tooth 32b and the third tooth 32c located left and right. That is, in the back yoke 31, four areas (yoke parts 41a, 42a, 41b, 42b) are sequentially formed in the circumferential direction so as to be divided with the first tooth 32a to the fourth tooth 32d as boundaries.

The first yoke parts 41a, 41b respectively form a magnetic passage between the first tooth 32a and the second tooth 32b, and a magnetic passage between the third tooth 32c and the fourth tooth 32d. These first yoke parts 41a, 41b are each formed in an arc shape and disposed so as to face to each other in the left-and-right direction. Each of the first yoke parts 41a, 41b also has a substantially constant width dimension.

The second yoke parts 42a, 42b respectively form a magnetic passage between the second tooth 32b and the third tooth 32c, and a magnetic passage between the fourth tooth 32d and the first tooth 32a. These second yoke parts 42a, 42b are each formed in an arc shape and disposed so as to face to each other in the up-and-down direction, that is, in the direction crossing (orthogonal to) the first yoke parts 41a, 41b. Each of the second yoke parts 42a, 42b also has the dividing part 35 in the present embodiment. Further, each of these second yoke parts 42a, 42b is designed to have a substantially constant width dimension except the dividing part 35, and is also formed gradually wider in width in the inner circumference side in the vicinity of each of the teeth 32 (at the position facing each of the attaching parts 33) .

Then, each of these first yoke parts 41a, 41b has a different circumferential length (a dimension in the direction along the circumferential direction of the back yoke 31) and a different width dimension (a dimension in the direction along the diameter direction of the back yoke 31) from the circumferential length and the width dimension of each of the second yoke parts 42a, 42b. Specifically, the first yoke parts 41a, 41b respectively have substantially the same circumferential lengths and the same width dimensions with each other, and the second yoke parts 42a, 42b respectively have substantially the same circumferential length and the same width dimension with each other. Further, the first yoke parts 41a, 41b respectively have substantially the same thicknesses as the thicknesses of the second yoke parts 42a, 42b. Then, the first yoke parts 41a, 41b are each designed to have a shorter circumferential length than the circumferential length of each of the second yoke parts 42a, 42b, while the first yoke parts 41a, 41b are each designed to have a wider width dimension than the width dimension of each of the second yoke parts 42a, 42b. Thus, the first yoke parts 41a, 41b each has a larger average cross-sectional area (=(volume)/(circumferential length)) and a smaller magnetic resistance, compared to each of the second yoke parts 42a, 42b. In other words, the magnetic passages formed at these first yoke parts 41a, 41b are designed to be larger than the magnetic passages formed at the second yoke parts 42a, 42b.

Herein, in the present embodiment, each of the first yoke parts 41a, 41b is formed so as to have a wider width both in the central axis side, that is, in the inner side (inner circumferential side) of the back yoke 31, and also in the opposite side to the central axis side, that is, in the outer side (outer circumferential side) . That is, each of the first yoke parts 41a, 41b has a larger outer diameter dimension than the outer diameter dimension of each of the second yoke parts 42a, 42b, and each of the first yoke parts 41a, 41b has a smaller inner diameter dimension than the inner diameter dimension of each of the second yoke parts 42a, 42b.

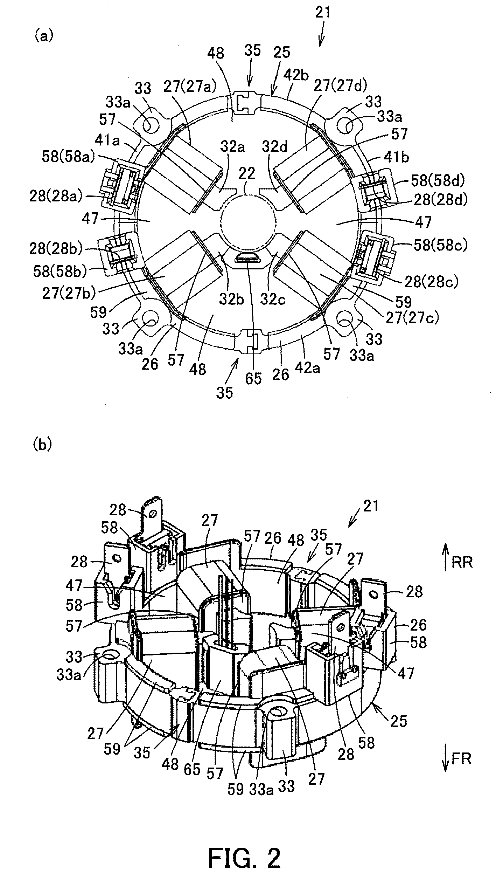

Fixed magnetic poles are formed at the teeth 32 by the coils 27 (Fig. 2(a) and Fig. 2(b)). As for these teeth 32, the first tooth 32a and the second tooth 32b are magnetically coupled, while the third tooth 32c and the fourth tooth 32d are magnetically coupled. Also, these teeth 32 respectively protrude along the diameter directions toward the central axis side, that is, to the side of the rotor 22 (Fig. 2(a)), from the inner circumferential portion of the back yoke 31. That is, each of these teeth 32 is formed in a longitudinal shape along the diameter direction of the back yoke 31, so that a base end portion 44 is connected to the back yoke 31 and a tip portion 45 protrudes in a free end shape. Thus, sector-shape opening parts are formed at spaces surrounded by the teeth 32 and the back yoke 31. Specifically, a first opening part 47 is formed at each of the space surrounded by the first tooth 32a, the second tooth 32b and the back yoke 31 (the first yoke part 41a), and the space surrounded by the third tooth 32c, the fourth tooth 32d and the back yoke 31 (the first yoke part 41b), while a second opening part 48 is formed at each of the space surrounded by the second tooth 32b, the third tooth 32c and the back yoke 31 (the second yoke part 42a), and the space surrounded by the fourth tooth 32d, the first tooth 32a and the back yoke 31 (the second yoke part 42b). In addition, the tip portion 45 of each of the teeth 32 forms a magnetism working surface facing the outer circumferential surface of the rotor 22. The magnetism working surface serves to provide to the rotor 22 the action by the fixed magnetic pole formed at each of the first tooth 32a to the fourth tooth 32d by the coil 27, and is separated via a slight gap from the outer circumferential surface of the rotor 22.

Furthermore, since the first yoke parts 41a, 41b have the same circumferential length with each other, the distance between the base end portions 44, 44 of the first tooth 32a and the second tooth 32b is substantially equal to the distance between the base end portions 44, 44 of the third tooth 32c and the fourth tooth 32d. Similarly, since the second yoke parts 42a, 42b have the same circumferential length with each other, the distance between the base end portions 44, 44 of the second tooth 32b and the third tooth 32c is substantially equal to the distance between the base end portions 44, 44 of the fourth tooth 32d and the first tooth 32a. Then, since the first yoke parts 41a, 41b respectively have shorter circumferential lengths than the circumferential lengths of the second yoke parts 42a, 42b, the distance between the base end portions 44, 44 of the first tooth 32a and the second tooth 32b and the distance between the base end portions 44, 44 of the third tooth 32c and the fourth tooth 32d are respectively shorter than the distance between the base end portions 44, 44 of the second tooth 32b and the third tooth 32c and the distance between the base end portions 44, 44 of the fourth tooth 32d and the first tooth 32a. In other words, the teeth 32 in pairs are disposed at closer distances to each other than the distances between the other teeth 32.

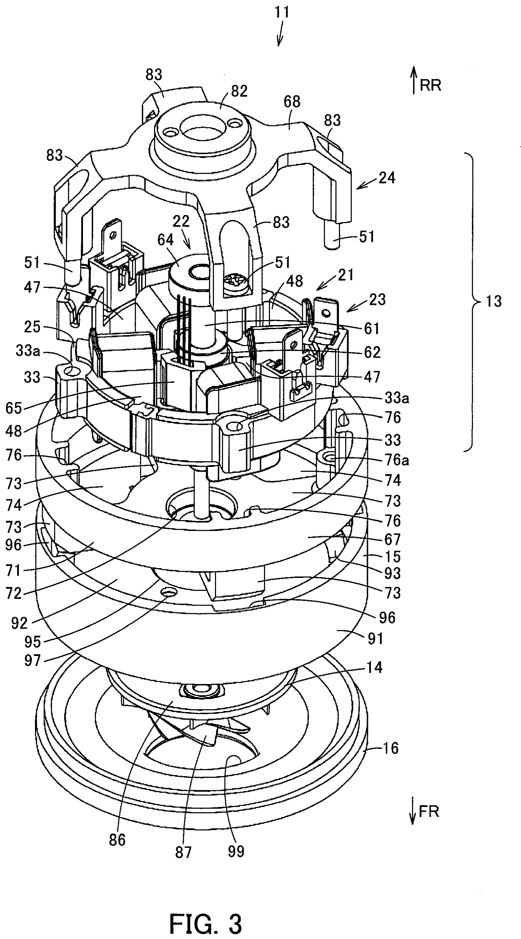

The attaching part 33 serves to fix the stator core 25 (stator 21) to the frame 24 (Fig. 3). The attaching part 33 arranged in the outer side (in the outer circumferential side) of the back yoke 31 so as to protrude in a square shape is disposed in the vicinity of the base end portion of each of the first tooth 32a to the fourth tooth 32d. Thus, four of the attaching parts 33 are provided spaced from one another in the circumferential direction of the back yoke 31 in the present embodiment. Also, each of the attaching parts 33 is positioned in the side of each of the second yoke parts 42a, 42b against the base end portion 44 of each of the teeth 32. That is, each of the attaching parts 33 is positioned at the outer circumferential portion of each of the second yoke parts 42a, 42b. Further, to each of the attaching parts 33, an attachment hole 33a penetrating in an axis direction (back-and-forth direction) is provided. A screw 51 serving as an attaching member is inserted into this attachment hole 33a and is screw-fitted to the side of the frame 24, and thus the stator core 25 (stator 21) is fixed to the frame 24 (Fig. 3). In addition, in the present embodiment, each of the attachment holes 33a is disposed so as to overlap with a part of the arc extended from the outer circumferential portion of the first yoke parts 41a, 41b. This reduces the outward (diameter direction) protruding extent of the attaching part 33 relative to the outer circumferential portion of the back yoke 31.

In the present embodiment, the dividing part 35 is set on the circumferential central part of each of the second yoke parts 42a, 42b. This dividing part 35 includes, for example, a recess part 54 which is a one hollow part and a protrusion part 55 which is the other part to be fit in this recess part 54. In the present embodiment, for example, the recess part 54 is provided in one end side of the yoke body 36 and the protrusion part 55 is provided in the other end side, while the recess part 54 is provided in the other end side of the yoke body 36 and the protrusion part 55 is provided in one end side. The yoke bodies 36, 37 are connected at these dividing parts 35 in the manner where the protrusion parts 55 are inserted into the recess parts 54 along the axis direction (back-and-forth direction).

The stator insulator 26 serves to insulate the coil 27, the terminal 28 and the like against the stator core 25. This stator insulator 26 is formed of insulating synthetic resin or the like. This stator insulator 26 is attached to the stator core 25. For example, the stator insulator 26 is formed to the stator core 25. In the present embodiment, this stator insulator 26 is disposed to each of the yoke bodies 36, 37. Then, the stator insulator 26 includes a winding holding part 57 for holding the coil 27. This stator insulator 26 also includes a terminal holding part 58 for holding the terminal 28. This stator insulator 26 further includes an insulator body portion 59 which is overlapped on the top and the bottom of the back yoke 31.

The winding holding part 57 is formed in a square cylindrical shape (bobbin shape), and each of the first tooth 32a to the fourth tooth 32d is inserted through the winding holding part 57 along the central axis thereof. Thus, each of these winding holding parts 57 protrudes along the diameter direction at a position in the inner circumferential side of the insulator body portion 59, and is positioned at the surrounding of each of the first tooth 32a to the fourth tooth 32d.

The terminal holding part 58 is formed in a square box shape having an opening at the back side, and in the present embodiment four of the terminal holding parts 58 are provided corresponding to the number of the terminals 28. Then, a pair of the terminal holding parts 58 is respectively disposed at positions so as to be attached to the back side of each of the first yoke parts 41a, 41b of the back yoke 31 (on each of the first yoke parts 41a, 41b), and the pair of terminal holding parts 58 positioned on the first yoke part 41a (a first terminal holding part 58a and a second terminal holding part 58b) is paired, while the pair of terminal holding parts 58 positioned on the first yoke part 41b (a third terminal holding part 58c and a fourth terminal holding part 58d) is paired.

The insulator body portion 59 is formed in a semi-arc shape extending from the first yoke part 41 (the first yoke parts 41a, 41b) of the back yoke 31 to the vicinity of central portion of the second yoke part 42 (the second yoke parts 42a, 42b).

The coil 27 forms the fixed magnetic pole at each of the first tooth 32a to the fourth tooth 32d. This coil 27 is formed in the manner where the winding wire including a conductor with its surface covered with an insulating layer is wound in a plurality of layers around the winding holding part 57. In the present embodiment, for example, the coils 27 disposed at the first tooth 32a and the third tooth 32c (a first coil 27a and a second coil 27b) form the same pole (for example, N pole or S pole) at the first tooth 32a and the third tooth 32c, while the coils 27 disposed at the second tooth 32b and the fourth tooth 32d (a third coil 27c and a fourth coil 27d) form at the second tooth 32b and the fourth tooth 32d the same pole (for example, S pole or N pole) but being different from the pole of the coils 27, 27 disposed at the first tooth 32a and the third tooth 32c.

Each of the terminals 28 serves to provide electrical connection between a control circuit and each of the coils 27. This terminal 28 is held by the terminal holding part 58, and protrudes toward the back side from the terminal holding part 58. Thus, a pair of the terminals 28 is disposed respectively at positions so as to be attached to the back side of each of the first yoke parts 41a, 41b of the stator core 25 (on each of the first yoke parts 41a, 41b). Then, the pair of terminals 28 (a first terminal 28a and a second terminal 28b) respectively disposed at the pair of terminal holding parts 58 (the first terminal holding part 58a and the second terminal holding part 58b) positioned on the first yoke part 41a is paired, while the pair of terminals 28 (a third terminal 28c and a fourth terminal 28d) respectively disposed at the pair of terminal holding parts 58 (the third terminal holding part 58c and the fourth terminal holding part 58d) positioned on the first yoke part 41b is paired.

The rotor 22 shown in Fig. 3 is a permanent magnet type rotor. The rotor 22 includes a rotation shaft 61 which is an output shaft to be connected to the centrifugal fan 14, and a magnet part 62 which is a rotor main body integrally provided around this rotation shaft 61. This rotor 22 is also rotatably held to the frame 24 via a pair of bearings 64 (only one bearing is shown in the figure). In addition, rotation of this rotor 22 is detected by a rotation detection sensor (position detection means) 65.

The rotation shaft 61 is positioned along the central axis of the frame 24. The front end side of this rotation shaft 61 protrudes forward with respect to the frame 24, and this protruding front end side is connected to the centrifugal fan 14.

The magnet part 62 including an embedded permanent magnet not shown in the figure has magnetic poles (rotating poles) having different polarities adjacent with each other in the rotating direction (in the circumferential direction) . Thus, in the magnet part 62, N pole and S pole are disposed in a pair successively and alternately in the rotating direction.

The bearings 64 are respectively attached to one end side and the other end side of the rotation shaft 61, and respectively fixed to the frame 24, so as to rotatably hold the rotor 22 with respect to the frame 24.

The rotation detection sensor 65, for example, a hall IC or the like, serves to detect a rotational position (rotation angle) of the rotor 22 by detecting a polarity of the magnetic pole of the rotor 22 (magnet part 62). The rotation detection sensor 65 is, as shown in Fig. 2(a), disposed at a position between the second tooth 32b and the third tooth 32c. Thus, the rotation detection sensor 65 is disposed at a position corresponding to the second yoke part 42a of the back yoke 31.

Back to Fig. 3, the frame 24 is formed of a light metal member, for example, aluminum or magnesium, or of synthetic resin, for example, BMC (FRP) or the like. This frame 24 includes a first frame body 67. The frame 24 also includes a second frame body 68. Then, the frame 24 is configured so as to sandwich and house the motor body portion 23 from the front side and the back side in the manner where the screw 51 is screwed so that the first frame body 67 and the second frame body 68 are fixed with each other in the back-and-forth direction.

The first frame body 67 is positioned in the front side of the frame 24. The first frame body 67 includes an enclosure part 71. The first frame body 67 includes a first bearing part 72. The first frame body 67 also includes a plurality of one connecting parts 73. The first frame body 67 has frame air suction opening parts 74 which are respectively partitioned.

The enclosure part 71 is formed in an annular shape. This enclosure part 71 has substantially the same outer diameter dimension as that of the diffuser 15. The enclosure part 71 has at a position in connection with each of the one connecting parts 73 a regulating part 76 to position the stator core 25 (stator 21) with regard to the circumferential direction. This regulating part 76 is positioned on the inner circumferential part of the enclosure part 71, and provided in a groove shape in the back-and-forth direction, that is, along the axis direction of the enclosure part 71 (frame 24 (the first frame body 67)), so as to be sandwiched by a pair of ribs. This regulating part 76 is also provided corresponding to the attaching part 33 of the stator core 25. Thus, in the present embodiment, four of the regulating parts 76 are provided so as to be spaced from each other in the circumferential direction of the enclosure part 71. Also, each of the attaching parts 33 is fitted into each of the regulating parts 76, thereby rotationally locking the stator core 25 (stator 21) with respect to the circumferential direction. In addition, each of the regulating parts 76 includes a boss-shaped screw-fitting part 76a which is provided continuously to each of the one connecting parts 73, and into which the screw 51 inserted through the attachment hole 33a of each of the attaching parts 33 of the stator core 25 is screwed.

The first bearing part 72 receives one of the bearings 64 to rotatably support the rotor 22. The first bearing part 72 includes a round through hole into which a fixing body such as a screw not shown in the figures is inserted so as to fix the brushless motor 13 and the diffuser 15 in the back-and-forth direction.

Each of the one connecting parts 73 radially protruding from the first bearing part 72 serves to connect the first bearing part 72 and the enclosure part 71. In the present embodiment, four of the one connecting parts 73 are provided.

Each of the frame air suction opening parts 74 is opened at a space surrounded by the enclosure part 71, the first bearing part 72, and adjacent one connecting parts 73, 73. These frame air suction opening parts 74 are opened so as to face the diffuser 15.

Also, the second frame body 68 is positioned in the back side of the frame 24. The second frame body 68 includes a second bearing part 82. The second frame body 68 also includes a plurality of other connecting parts 83.

The second bearing part 82 receives the other of the bearings 64 to rotatably support the rotor 22.

In the present embodiment, four of the other connecting parts 83 are provided. The tip side of each of the other connecting parts 83 is bent forward, that is, to the side of the first frame body 67. The screw 51 is inserted through the tip side of each of these other connecting parts 83. And the screw 51 inserted through the tip side of each of the other connecting parts 83 is further inserted through the attachment hole 33a of the attaching part 33 of the stator core 25 to be screwed into the screw-fitting part 76a of the first frame body 67, and thereby the first frame body 67 and the second frame body 68 are fixed to each other.

Then, as shown in Fig. 4(b), in the state where the second frame body 68 and the first frame body 67 are fixed to each other, each of frame air exhaust opening parts 84 for discharging outside the air having flowed into the brushless motor 13 is partitioned at a space surrounded by the enclosure part 71 of the first frame body 67, the second bearing part 82 of the second frame body 68, and adjacent other connecting parts 83, 83. The terminals 28 are positioned so as to be exposed from the pair of the frame exhaust opening parts 84 facing to each other out of these frame air exhaust opening parts 84.

The control circuit includes, for example, a driver including an inverter circuit, and a control part for performing PWM control to this driver, and is electrically connected to each of the terminals 28 and the rotation detection sensor 65. Then, this control circuit is configured to control a direction and a conduction duration of current flowing in the winding wire of the coil 27 by the driver so as to switch at time intervals the magnetic pole to be generated at each of the first tooth 32a to the fourth tooth 32d of the stator core 25 of the stator 21 via the first coil 27a to the fourth coil 27d shown in Fig. 2(a).

The centrifugal fan 14 shown in Fig. 3 serves to straighten air from the center side to the outer circumferential side upon being rotated by the brushless motor 13. This centrifugal fan 14 is formed of a member of, for example, synthetic resin excellent in heat resistance, wear resistance and the like, or light metal such as aluminum. This centrifugal fan 14 also includes a fan main body 86. This centrifugal fan 14 further includes a plurality of fan blades 87.

The fan main body 86 is a portion to be fixed integrally to the end portion of the rotation shaft 61 of the brushless motor 13. This fan main body 86 is formed in a cylindrical shape with the diameter thereof gradually expanding from one end portion (front end portion) to the other end portion (rear end portion).

The fan blades 87 protrude to the front side of the fan main body 86, which is the opposite side to the brushless motor 13 (diffuser 15). These fan blades 87 may be formed in, for example, a spiral shape gradually curving from the center of the fan main body 86 to the outer circumference. These fan blades 87 are spaced to each other in the circumferential direction, and configured to straighten air from the center side to the outer circumferential side by the centrifugal fan 14 rotating in one directional.

The diffuser 15 serves to straighten the air straightened by the centrifugal fan 14 and then to flow the air into the brushless motor 13. This diffuser 15 may include an outer frame part 91. This diffuser 15 may include a straightening body portion 92. In addition, this diffuser 15 includes a plurality of straightening blades 93.

The outer frame part 91 is formed in an annular shape having substantially the same diameter dimension as that of the enclosure part 71 of the frame 24.

The straightening body portion 92 is formed at a position inside the outer frame part 91. This straightening body portion 92 may include an attachment opening 95. This straightening body portion 92 may also include a positioning part 96. This straightening body portion 92 may further include an open hole 97 which is a fixing hole part.

The first bearing part 72 of the brushless motor 13 is fitted to the attachment opening 95, and thus the rotation shaft 61 is exposed at the attachment opening 95. This attachment opening 95 is formed, for example, in a circular shape.

In the present embodiment, the straightening blades 93 are formed so as to connect the outer frame part 91 and the straightening body portion 92 in between. Then, the space surrounded by these straightening blades 93 serves as an air path portion running through the diffuser 15 in the back-and-forth direction.

The positioning part 96 serves to position the brushless motor 13 against the diffuser 15. Each of the positioning parts 96 is provided in a groove shape along the back-and-forth direction in the rear part of the diffuser 15, that is, in the side facing the brushless motor 13, on the inner circumferential part of the outer frame part 91. Each of these positioning parts 96 is configured to prevent the brushless motor 13 from rotating in the circumferential direction relative to the diffuser 15 when a part (one connecting parts 73) of the frame 24 of the brushless motor 13 is fitted into each of the positioning parts 96. Therefore, in the present embodiment, four of the positioning parts 96 are provided to the diffuser 15 (only partially shown in the figure).

The open hole 97 is used so that a fixing member fixes the diffuser 15 and the brushless motor 13. Each of the open holes 97 serves to fix the brushless motor 13 (first frame body 67) and the diffuser 15 to each other, when each of the open holes 97 is positioned to match the through hole provided on the first frame body 67 of the brushless motor 13 and then, for example, a fixing body inserted from the back side is screwed into this through hole.

The fan cover 16 is attached to the diffuser 15 so as to cover a part of the centrifugal fan 14. This fan cover 16 is formed in a substantially cylindrical shape having substantially the same diameter dimension as that of the diffuser 15 and that of the frame 24 (enclosure part 71) of the brushless motor 13. Then, an air suction port 99 is opened on this fan cover 16 so as to expose the central part of the centrifugal fan 14, and this fan cover 16 is inclined so as to be gradually expanded from the air suction port 99.

The procedure of assembling the electric blower 11 according to the first embodiment described above will be described with reference to figures.

First, the brushless motor 13 is assembled. That is, after the stator insulator 26 is integrally formed through insert molding or the like to each of the yoke bodies 36, 37 of the previously formed stator core 25, a winding wire is wound around each of the winding holding parts 57 of the stator insulator 26 to form the coil 27. In this case, the stator core 25 is divided into the yoke bodies 36, 37 and the side of the dividing part 35 is opened. This allows automatic wire winding of a wire to the winding holding parts 57 by use of a winding device not shown in the figures. Then, the end portion of the wire is introduced to each of the terminal holding parts 58, and each of the terminals 28 is attached to each of these terminal holding parts 58 so that each of the terminals 28 and the wire are connected, thereby providing electrical connection between each of the terminals 28 and each of the coils 27. Then, the protrusion parts 55 are slid to be inserted into the recess parts 54 so that the yoke bodies 36, 37 are fitted to each other, thereby forming the stator core 25 formed with the yoke bodies 36, 37 integrally connected to complete the stator 21.

Next, in the state where each of the one connecting parts 73 is fitted into each of the positioning parts 96 so that the previously-formed first frame body 67 of the frame 24 is fitted to the diffuser 15, a fixing body is inserted into a through hole to be screwed into the open hole 97 so that the first frame body 67 is fixed to the diffuser 15. Then, each of the attaching parts 33 of the stator core 25 is inserted into each of the regulating parts 76 so that the stator 21 is positioned in the circumferential direction relative to the first frame body 67. Besides, the bearing 64 of the rotor 22 is held by the first bearing part 72, while the rotation shaft 61 of the rotor 22 configured with the magnet part 62 and the bearing 64 attached to the rotation shaft 61 is inserted into the first bearing part 72 of the first frame body 67 from the space surrounded by the teeth 32 of the stator 21. In this case, the rotation detection sensor 65 is disposed close to and facing to the outer circumference of the rotor 22 (magnet part 62).

Then, the tip sides of the other connecting parts 83 are respectively positioned to the regulating parts 76 of the first frame body 67, and the screws 51 are respectively inserted through the attachment holes 33a of the stator core 25 into the screw-fitting parts 76a of the first frame body 67 so that the second frame body 68 is screw-fixed, and thereby the first frame body 67 and the second frame body 68 hold to fix the stator 21 and the rotor 22 in between. In this state, each of the terminals 28 is exposed from each of the frame air exhaust opening parts 84.

Then, the centrifugal fan 14 is attached by press-fitting or other method to the rotation shaft 61 of the brushless motor 13 protruding from the attachment opening 95 of the diffuser 15, and the fan cover 16 is fixed by press-fitting or bonding to the diffuser 15 so as to cover the centrifugal fan 14, thereby completing the electric blower 11.

The electric blower 11 assembled in the above-described procedure detects a rotational position of the rotor 22 by the rotation detection sensor 65, and controls, according to the detected rotational position, a direction and a conduction duration of current flowing in the winding wire of each of the coils 27 by the control circuit so as to sequentially form magnetic poles at the first tooth 32a to the fourth tooth 32d, thereby rotating the rotor 22 by the repulsion and attraction between these formed magnetic poles and the magnetic pole of the rotor 22. In this case, in the stator core 25 having the first yoke parts 41a, 41b wider in width and shorter in length in the circumferential direction compared to the second yoke parts 42a, 42b, a magnetic flux flows more easily in the first yoke parts 41a, 41b compared to the second yoke parts 42a, 42b. Thus, the loop-shaped magnetic passage formed by the first tooth 32a, the first yoke part 41a and the second tooth 32b, and the loop-shaped magnetic passage formed by the third tooth 32c, the first yoke part 41b and the fourth tooth 32d (first magnetic passages) are larger than the loop-shaped magnetic passage formed by the second tooth 32b, the second yoke part 42a and the third tooth 32c, and the loop-shaped magnetic passage formed by the fourth tooth 32d, the second yoke part 42b and the first tooth 32a (second magnetic passages). Thus, the second magnetic passages are substantially hardly formed, and only the first magnetic passages are formed. This generates, as a result, strong magnetic poles at the first tooth 32a to the fourth tooth 32d to drive the brushless motor 13 in a high efficiency, and thus the centrifugal fan 14 connected to the rotor 22 of this brushless motor 13 rotates at high speed (for example, at approx. 100000 rpm). Then, air is sucked from the air suction port 99 into the electric blower 11 by the negative pressure generated by the rotation of the centrifugal fan 14 of the electric blower 11. The sucked air is straightened by the centrifugal fan 14 toward the circumference of this centrifugal fan 14, and then straightened by the diffuser 15 to flow from the air path portion into the brushless motor 13 through the frame air suction opening part 74. The air, after cooling the stator 21 and the rotor 22 while passing by the first opening part 47 and the second opening part 48 of the stator 21 of the brushless motor 13, and then cooling each of the coils 27 (winding wire) and each of the terminals 28 while passing inside the frame 24 of this brushless motor 13, is exhausted from the frame air exhaust opening part 84.

As described above, according to the above first embodiment, the first yoke part 41 (first yoke parts 41a, 41b) is formed having a wider width both in the central axis side of the back yoke 31 and in the opposite side to this central axis side, compared to the second yoke part 42 (second yoke parts 42a, 42b). Herein, in the case of the first yoke part 41 (first yoke parts 41a, 41b) enlarged in the width dimension, for example, the back yoke 31 enlarged in the central axis side allows less increase of the weight thereof while securing the width dimension. The back yoke 31 enlarged in the opposite side to the central axis side allows easier winding with the opening part enlarged so as to enlarge the space for winding of the coils 27. Therefore, the back yoke 31 is formed so as to have a wider width both in the central axis side and in the opposite side to this central axis side, thereby enabling to adjust and set the balance between them according to the purpose and object with respect to the electric blower 11.

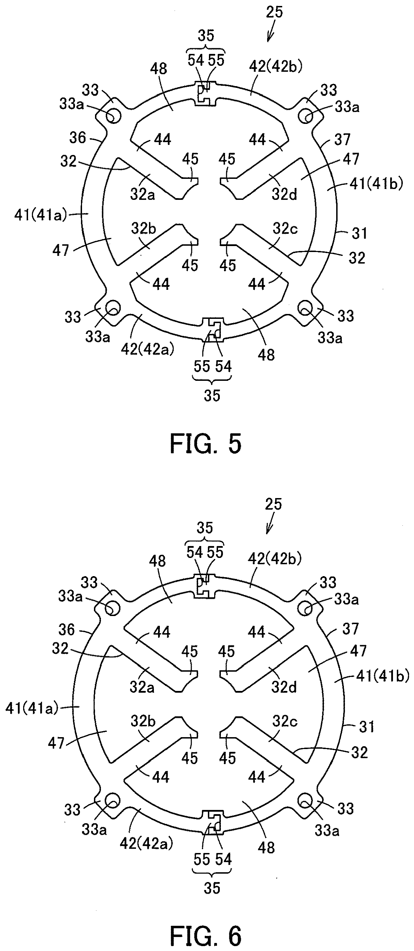

In addition, in the above-described first embodiment, the stator core 25 may be formed, for example, as in a second embodiment shown in Fig. 5, so that the first yoke part 41 (first yoke parts 41a, 41b) has a wider width in the central axis side, that is, internal side, of the back yoke 31 compared to the second yoke part 42 (second yoke parts 42a, 42b). This case enables to suppress increase in weight while securing the width dimension of the first yoke part 41, compared to the case with the width enlarged in the opposite side to the central axis side of the back yoke 31.

Similarly, for example, as in a third embodiment shown in Fig. 6, the stator core 25 may be formed so that the first yoke part 41 (first yoke parts 41a, 41b) has a wider width in the opposite side to the central axis side, that is, in the outer side, of the back yoke 31 compared to the second yoke part 42 (second yoke parts 42a, 42b). This case enables to suppress reduction in area of the first opening part 47 while securing the width dimension of the first yoke part 41, compared to the case with the width of the back yoke 31 enlarged in the central axis side, thus facilitating the winding due to the enlarged space for winding of the coils 27, resulting in improving the manufacturability.

According to at least one of the above-described embodiments, the stator core 25 has the larger magnetic passages formed at the first yoke part 41 (first yoke parts 41a, 41b) compared to the magnetic passages formed at the second yoke part 42 (second yoke parts 42a, 42b), thus enabling to form strong magnetic poles at the teeth 32 and to improve the efficiency of the brushless motor 13, that is, the efficiency of the electric blower 11. Also, since the stator core 25 has the teeth 32 each protruding from the back yoke 31 in a cylindrical shape, the mutual positional relations among the teeth 32 are fixed constant, and the positions of the tip sides of the teeth 32 to the rotor 22 enable to be set more accurately compared to the case where, for example, C-shaped stator cores in a pair are disposed facing to each other.

Specifically, the width dimension of the first yoke part 41 (first yoke parts 41a, 41b) is designed to be larger than the width dimension of the second yoke part 42 (second yoke parts 42a, 42b), thereby easily enabling to set the magnetic passages larger to be formed at the first yoke part 41 (first yoke parts 41a, 41b) than the magnetic passage to be formed at the second yoke part 42 (second yoke parts 42a, 42b).

This enables to provide the second opening part 48 wider formed at the position of the second yoke part 42 (second yoke parts 42a, 42b), and thus the air sucked by the rotation of the centrifugal fan 14 into the brushless motor 13 is allowed to effectively pass through the second opening part 48 to efficiently cool the motor body portion 23, thereby enabling to suppress the reduction in efficiency caused by heat generation.

In addition, the length of the first yoke part 41 (first yoke parts 41a, 41b) in the circumferential direction is designed to be shorter than the length of the second yoke part 42 (second yoke parts 42a, 42b) in the circumferential direction, thereby easily enabling to set the magnetic passages larger formed at the first yoke part 41 (first yoke parts 41a, 41b) compared to the magnetic passages formed at the second yoke part 42 (second yoke parts 42a, 42b).

Also, the back yoke 31 is divided into the plurality of yoke bodies 36, 37, thus allowing wire winding for the coils 27 to the teeth 32 corresponding to each of the yoke bodies 36, 37. Thus, in the case of the back yoke 31 to be downsized, wire winding is not easily performed to the back yoke 31 in a cylindrical shape as is due to a small space, while wire winding is enabled to be performed to the yoke bodies 36, 37, thus enabling to cope with automatic winding, for example, by machine or the like, resulting in improving the manufacturability.

In addition, since the back yoke 31 is divided into the plurality of yoke bodies 36, 37 at the positions of the second yoke part 42 (second yoke parts 42a, 42b) in which the magnetic passages are smaller and the magnetic fluxes hardly flow compared to the first yoke part 41 (first yoke parts 41a, 41b), the dividing part 35 of the yoke bodies 36, 37 hardly disturbs the magnetic poles formed at the teeth 32 mainly via the first yoke part 41 (first yoke parts 41a, 41b), thus giving less influence to the efficiency. Further, the dividing part 35 contributes to the increase of the magnetoresistance of the second yoke part 42 (second yoke parts 42a, 42b). These facilitate the formation of the configuration in which the magnetic passages formed at the first yoke part 41 (first yoke parts 41a, 41b) are relatively larger than the magnetic passages formed at the second yoke part 42 (second yoke parts 42a, 42b).

In addition, each of the attachment holes 33a into which the screw 51 is inserted so as to fix the stator core 25 to the frame 24 and the diffuser 15 by the screw 51 is disposed in the vicinity of the base end portion 44 of each of the teeth 32 in the side of the second yoke part 42 (second yoke parts 42a, 42b) in which the magnetic passages are smaller and the magnetic fluxes hardly flow compared to the first yoke part 41 (first yoke parts 41a, 41b), and thereby the reduction in area and width dimension caused by each of the attachment holes 33a hardly disturbs the magnetic poles formed at the teeth 32 mainly via the first yoke part 41 (first yoke parts 41a, 41b), resulting in giving less influence to the efficiency. Therefore, the position of the screw 51 is enabled to be disposed closer to the center side in width of the second yoke part 42 (second yoke parts 42a, 42b), that is, nearer to the central axis side of the back yoke 31, and thus the attaching part 33 protrudes less toward the outside of the back yoke 31, resulting in enabling to downsize the stator core 25 and the frame 24.

Further, each of the terminals 28 electrically connected to each of the coils 27 is disposed on the first yoke part 41 (first yoke parts 41a, 41b) which is shorter in length in the circumferential direction compared to the second yoke part 42 (second yoke parts 42a, 42b) in the state of being insulated from the first yoke part 41 (first yoke parts 41a, 41b), thus enabling to shorten the wiring from the winding wire of each of the coils 27 to each of the terminals 28, resulting in further suppressing the decrease in efficiency.

The rotation detection sensor 65 for detecting the rotation of the rotor 22 is disposed so as to face the outer circumference of the rotor 22, at a position on the second yoke part 42 (second yoke parts 42a, 42b) which is longer in length in the circumferential direction than the first yoke part 41 (first yoke parts 41a, 41b) and also in which the magnetic passages are small and the magnetic fluxes hardly flow. Therefore, the rotation detection sensor 65 hardly receives an influence from the magnetic field of the coils 27, resulting in enabling to secure the sensing accuracy.

As a result, the brushless motor 13 is enabled to be downsized and reduced in weight, and thus the electric blower 11 equipped with the brushless motor 13 is enabled to be downsized and reduced in weight.

While certain embodiments have been described, these embodiments have been presented by way of example only, and are not intended to limit the scope of the inventions . Indeed, the novel embodiments described herein may be embodied in a variety of other forms; furthermore, various omissions, substitutions, and changes in the form of the embodiments described herein may be made without departing from the spirit of the inventions. The accompanying claims and their equivalents are intended to cover such forms or modifications as would fall within the scope and spirit of the inventions.

## Claims

1. An electric blower comprising a fan and a single-phase 4-pole brushless motor for rotating the fan, wherein
the brushless motor has:
a rotor connected to the fan; and
a stator including a stator core, the stator rotating the rotor, wherein
the stator core has:
four teeth each having one end side disposed so as to face a circumference of the rotor, and each having a coil wound around in a state of being insulated; and
a back yoke having a cylindrical shape, the back yoke forming a magnetic passage so as to connect other end sides of the teeth in between, wherein
the back yoke has:
first yoke parts each being positioned between one pair of the teeth and facing to each other, the first yoke parts respectively having substantially equal lengths in a circumferential direction; and
second yoke parts each being positioned between one of the pairs of the teeth and an other of the pairs of the teeth and facing to each other, the second yoke parts respectively having substantially equal lengths in a circumferential direction, and wherein
the first yoke parts respectively have shorter lengths in the circumferential direction compared to the second yoke parts, and further the magnetic passages formed at the first yoke parts are respectively larger than the magnetic passages formed at the second yoke parts.

2. The electric blower according to Claim 1, wherein
each of the first yoke parts has a larger width dimension compared to each of the second yoke parts.

3. The electric blower according to Claim 2, wherein
each of the first yoke parts is formed so as to have a wider width in a central axis side of the back yoke compared to each of the second yoke parts.

4. The electric blower according to Claim 2, wherein
each of the first yoke parts is formed so as to have a wider width in an opposite side to a central axis side of the back yoke compared to each of the second yoke parts.

5. The electric blower according to Claim 2, wherein
each of the first yoke parts is formed so as to have a wider width in a central axis side of the back yoke and in an opposite side to the central axis side compared to each of the second yoke parts.

6. The electric blower according to any one of Claim 1 to Claim 5, wherein
the back yoke is divided into a plurality of yoke bodies .

7. The electric blower according to Claim 6, wherein
the back yoke is divided into the plurality of yoke bodies at positions on the second yoke parts.

8. The electric blower according to any one of Claim 1 to Claim 7, the electric blower comprising:
an attachment hole receiving an attaching member to be inserted for fixing the stator core by the attaching member, wherein
the attachment hole is positioned in a vicinity of a base end portion of each of the teeth in a side of each of the second yoke parts.

9. The electric blower according to any one of Claim 1 to Claim 8, the electric blower comprising:
terminals each disposed on each of the first yoke parts in a state of being insulated from the first yoke parts, the terminals each electrically connected to each of the coils.

10. The electric blower according to any one of Claim 1 to Claim 9, the electric blower comprising:
a rotation detection sensor disposed on at least one of the second yoke parts so as to face an outer circumference of the rotor, the rotation detection sensor detecting rotation of the rotor.
